# EUROPEAN PATENT APPLICATION

(11) **EP 3 862 545 A1**
(43) Date of publication of application: **11.08.2021**
(21) Application number: 21165386.0
(22) Date of filing: 15.02.2019
(51) Int. Cl.: F01N 3/20, F01N 3/021, F01N 9/00, F01N 11/00, F01N 13/00, F01N 3/00, F01N 3/08

(54) **POLLUTANT ABATEMENT SYSTEM OF AN INTERNAL COMBUSTION ENGINE AND INTERNAL COMBUSTION ENGINE COMPRISING THE ABATEMENT SYSTEM**

(30) Priority: 15.02.2018 IT 201800002727
(62) Divisional of application: 19157573.7
(71) Applicant: FPT Industrial S.p.A., 10156 Torino (IT)
(72) Inventor: D'EPIRO, Clino, 10091 ALPIGNANO (TO) (IT)
(74) Representative: Bongiovanni, Simone

(57) **Abstract**

An abatement system for pollutants produced by an internal combustion engine (E) having an intake pipe (IP) and an exhaust pipe (EP), the system comprising a device (ATS) for the abatement of pollutants contained in the exhaust gases produced by the internal combustion engine, wherein said device comprises at least a first exhaust gas treatment portion (ATS1, ATS1') comprising an NSC, fuel metering means (J1, J1') designed to introduce fuel into said first treatment portion, a first cooler (GC) arranged along said exhaust pipe upstream of said first treatment portion, and comprising its own bypass means (BP2, FP2) for adjusting a temperature of said first treatment portion.

## Description

### Cross-reference to related applications

This patent application claims priority from Italian patent application no. 102018000002727 filed on 15/02/2018.

### Technical field of the invention

The invention relates to the field of the so-called exhaust gas after-treatment devices of an internal combustion engine.

### State of the art

The regulations concerning harmful emissions of terrestrial vehicles are becoming more and more restrictive and, therefore, it is necessary to identify single devices or sets of devices connected to one another which are capable of reducing pollutants emissions.

### Devices like

DPF = Diesel particulate filter,
NSC = NOx trap, which converts NO into NO₂ and stores it until said N02 needs to be reduced, at first, to NO and then to N2 by means of a so-called regenerative process, which must be carried out in an atmosphere without oxygen and rich in HC,
DOC = Diesel oxidation catalyst,
SCR = selective catalytic converter, which exploits the presence of ammonia to reduce NOx contained in exhaust gases, CUC = ammonia reducer, which is generally used as last component of the ATS in order to avoid releasing ammonia into the atmosphere, for it would help increase the amount of pollutants introduced into the atmosphere.

They are well known to a person skilled in the art and the respective abbreviations are acronyms of known English expressions.

They are generally used in Diesel engines.

A problem of NSC systems is that they are not capable of operating above 350°C. For this reason, especially in applications with a high specific power, they have always been left out in order to use SCR systems.

Another crucial drawback affecting NSC systems lies in the fact that N02 is released in a pulsed manner, i.e. in highly irregular quantities and in a way that can hardly be predicted.

It is necessary to provide a quantity of HC proportionate to N02 released with the correct timing. In order to provide said HC, after-injection of fuel into the cylinders are generally carried out, namely injections of fuel that take place during the exhaust phase. Alternatively, a fuel metering device can be implemented, which is arranged along the exhaust pipe of the engine, immediately upstream of the NSC.

It is evident that an anticipatory model is needed to manage the injection of fuel so as to provide the correct quantity of HC, especially in the right moment. A wrong prediction of the moment in which said N02 is released causes HC and N02 which have not evidently reacted with one another, neutralizing one another, to be released into the environment. This leads to an increase in the quantity of pollutants introduced into the atmosphere.

To this regard, the thermal management of the NSC inside the ATS plays a crucial role, for its ideal operating temperature window ranges from 200 to 350°C.

### Summary of the invention

The object of the invention is to improve the performances of an internal combustion engine in terms of pollutant reduction by means of an exhaust gas treatment device, which is designed to be connected downstream of an internal combustion engine in order to treat the exhaust gases thereof, and to offer a relating operating strategy.

The idea on which the invention is based is that of implementing a first ATS portion comprising an NSC trap with a relating fuel metering device of the NSC and of placing a cooler, which can be bypassed, upstream of said first ATS portion.

Said cooler can be a gas cooler, thus including fresh air, or a liquid cooler, for example exploiting the cooling water of the internal combustion engine.

This advantageously allows the temperature of the NSC to be limited, thus allowing the operation thereof to be extended. According to a preferred variant of the invention, the outlet of the NSC is connected to the inlet of the internal combustion engine, so as to redirect all regeneration products to the internal combustion engine, during the regeneration of the NSC. Therefore, the internal combustion engine acts like a device for the abatement of the regeneration products of the NSC.

Hence, during the regeneration of the NSC, the entire exhaust gas flow circulated through NSC is recirculated to the intake of the internal combustion engine and, therefore, there is no risk of releasing regeneration products into the atmosphere.

These regeneration products comprise, among others: H2, CO, HC, NH3 and the aforesaid N02, which, as already mentioned above, are released in a pulsed manner.

An advantage lies in the fact that the extra consumption of fuel injected through the fuel metering device of the NSC or through after-injections can be almost completely compensated with a decrease in the fuel injected into the cylinders of the internal combustion engine to supply the internal combustion engine itself. Therefore, the fuel consumption balance remains unchanged or changes to a small extent.

Another important advantage lies in the fact that no precise anticipatory model for the N02 release peak is needed, because the excess N02 and/or the excess HC are entirely redirected to the intake of the internal combustion engine. At least during the regeneration, the aforesaid cooler is bypassed in order to ensure an ideal temperature of the NSC for the release of the previously absorbed N02.

According to a further preferred variant of the invention, the internal combustion engine is provided with an exhaust gas recirculation - EGR system, namely a high-pressure EGR system, to recirculate exhaust gases in order to reduce the NOx generated by the internal combustion engine.

The EGR system is often provided with its own cooler and with a possible relating bypass duct to bypass the cooler when the engine is cold.

According to a further preferred variant of the invention, said cooler of the EGR is used to cool the exhaust gases produced by the internal combustion engine and directed to the ATS without flowing through the internal combustion engine. In other words, the cooler of the EGR is used to limit the temperature of a portion of the exhaust gases that are directed to the ATS without flowing through the internal combustion engine again.

During the regeneration of the NSC, a portion of the exhaust gases produced by the internal combustion engine is directed towards the atmosphere by means of a bypass duct of said first ATS portion or by means of a further first ATS portion comprising an NSC which is structurally arranged in parallel relating to the other ATS portion. Therefore, there are a first and a second NSC, which regenerate alternatively. The fact that they regenerate alternatively does not mean that they cannot work in parallel, thus reducing the total load losses offered by the ATS to the exhaust manifold of the internal combustion engine, when they operate under normal conditions.

The presence of a bypass duct or of another first portion, which is arranged in parallel, allows the flow flowing through the NSC to be chocked in a regeneration condition, thus reducing the quantity of fuel to be injected.

When one single NSC is implemented in combination with a bypass duct, immediately downstream of the NSC there is a recirculation duct, which is designed to connect the outlet of the NSC with the intake pipe of the internal combustion engine during the regeneration of the NSC.

In other words, the bypass duct is connected to the exhaust pipe in a first point, immediately upstream of the first treatment portion, and in a second point, downstream of the first treatment portion. The recirculation duct leading to the intake manifold of the internal combustion engine is connected between said first treatment portion and said second point. Between said second and said third point, namely between the inlet of the recirculation duct and the outlet of the bypass duct, there is a valve, which is designed to isolate the NSC from the outside or, at the same time, to allow the exhaust gases to flow through the bypass duct.

This valve preferably is a three-way vale of the ON/OFF type, which selects the passage of the exhaust gases through the first ATS portion or through the relating bypass duct. Therefore, in regeneration conditions, a first exhaust gas portion is recirculated towards the internal combustion engine through the NSC, whereas a second portion is directed to the outside, without flowing through said NSC, through said bypass duct.

According to a further preferred variant of the invention, two first ATS portions, each comprising an NSC, are structurally arranged in parallel to one another, each one of them having its own recirculation duct, which is designed to connect its own outlet to the intake pipe of the internal combustion engine, and its own valve, which is arranged downstream of said recirculation duct so as to isolate the relating NSC from the outside during a relating regeneration. In this case, again, the entire portion of exhaust gases flowing through an NSC during the regeneration thereof is entirely recirculated to the intake of the internal combustion engine.

When two first ATS portions with the relating valves are implemented, it is evident that they can never be closed at the same time.

In case of Diesel engines, the use of the SCR and, hence, the injection of urea-based reducing agent is limited to those rare occasions on which the temperature of the exhaust gases is such that it cannot be limited to the limit temperature (approximately 350°C) of the NSC, beyond which it is not able to store N02 any longer.

During the regeneration phase, the cooler arranged upstream of the first ATS portion is bypassed so as to quickly heat the NSC, thus reducing regeneration times.

If it consists of a heat exchanger supplied with the cooling water of the internal combustion engine, when the engine is cold, the cooler should not be bypassed, because it helps recover heat, which determines a quick heating of said water and, consequently, of the internal combustion engine. According to current regulations, the efficiency of the ATS is evaluated after a given amount of time from the starting of the internal combustion engine.

During this amount of time, the bypass can be activated as long as the ATS reaches a minimum efficiency level and then it can be deactivated in order to support the heating of the internal combustion engine.

Nevertheless, said cooler can be an air cooler, namely exploit the environmental air to cool the exhaust gases or exploit the exhaust gases themselves after they have flown through a significant segment of the exhaust pipe downstream of the first ATS portion. When the cooler is an air cooler, e.g. an air/gas or a gas/gas cooler, the cooler should be bypassed from the starting of the engine until the aforesaid minimum temperature of 200°C of the ATS is reached.

When there is a fuel metering device arranged upstream of the NSC/s, said metering device is designed to introduce atomized fuel immediately upstream of the first ATS portion. According to a first operating condition, i.e. a normal operating condition, of the first ATS portion, the metering device is closed and the valve downstream of the NSC is arranged so as to direct the exhaust gases that have flown through the NSC towards the outside, closing the bypass duct. According to a second operating condition, i.e. a regeneration operating condition, the metering device is working, the valve downstream of the relating NSC is arranged so as to isolate the relating NSC from the outside and, in case of combination with a bypass duct, the bypass duct becomes operative as well.

It is evident that said fuel metering device is completely independent of the injectors with which the relating internal combustion is provided.

Advantageously, only a fraction of the exhaust gases flows through the NSC during a relating regeneration. This fraction of exhaust gases represents a carrier means to transport the fuel injected by the metering device or through after-injections in order to obtain the regeneration of the NSC. The metered fuel must, at first, eliminate the residual oxygen present in the fraction of exhaust gases and, consequently, help reduce the N02 released by the NSC. Since only a fraction of exhaust gases is used as carrier means, the quantity of metered fuel is significantly reduced because the residual oxygen contained therein is significantly reduced.

According to a preferred variant of the invention, the first ATS portion is designed in such a way that immediately downstream of the NSC and upstream of the relating valve there is a passive SCR. According to this preferred variant of the invention, a regeneration process is prolonged so as to support the massive formation of NH3, which can be stored by the core of the SCR and used to catalyse at least a portion of the NOx flowing through it. As already mentioned above, the remaining regeneration products are recirculated in the internal combustion engine through said recirculation duct, which completes the regeneration process eliminating them in the internal combustion engine.

Advantageously, the high temperature reached in the first portion of the ATS, during the regeneration condition, allows for the production of the aforesaid CO, HC, H2 and NH3 species, which represent what is usually called "reforming" of the fuel, though operated, according to the invention, by means of the NSC, therefore the NSC acts like a reformer of the fuel. As it is known, fuel reforming significantly reduces the production of NOx by the internal combustion engine and, therefore, the exhaust gas fraction possibly released into the atmosphere by means of the bypass duct is substantially poor in NOx. This implies that, in some circumstances, said limited quantity of NOx can be released into the atmosphere without further specific treatments.

It is known that the calibration of the engines, namely the fuel injection maps and the relating advance, can be properly changed.

According to a preferred variant of the invention, during NSC regeneration procedures, the calibration of the engine is changed taking into account the fuel introduced into the exhaust pipe through said metering device or through said after-injections as well as the relating total reforming inside the NSC, so as to minimize the production of NOx. This calibration can change not only the quantity of fuel injected into the cylinder to supply the internal combustion engine, but also the relating injection timing and, if necessary, the ignition timing when the engine is a spark-ignition engine.

It should be pointed out that the first ATS portion can comprise both an NSC and DPF arranged upstream of the NSC. According to a preferred ATS control strategy, before starting the regeneration of the hence and, hence, before switching the aforesaid vale downstream of the NSC, the relating metering device is controlled so as to obtain a total lambda at the inlet of the first ATS portion slightly above 1, namely ranging from 1.01 to 1.2. This allows for a temperature increase and, hence, for the regeneration of the DPF, as residual oxygen is necessary for the combustion of the particulate matter stored in the DPF. After this phase, the regeneration of the NSC starts, during which the valve downstream of the first treatment portion is switched, thus enabling the bypass duct, and the relating metering device is controlled so as to obtain a total lambda at the inlet of the first ATS portion slightly below 1, namely ranging from 0.8 to 0.99. This allows for the desorption of N02 stored in the NSC and for the direct reduction thereof with hydrocarbons as reducing agent. At the end of the regeneration, the valve is switched again, thus disabling the bypass duct.

The fact of carrying out the two regenerations in succession leads to the advantage of gradually increasing the temperature of the first ATS portion.

Preferably, the core of the DPF is coated with an oxidising treatment, for example a platinum-based one. During the normal operation of the ATS, the oxidising coating allows for the oxidation of NO to N02 contained in the exhaust gases produced by the internal combustion engine. This N02 increase supports the natural regeneration of the DPF. Natural regeneration is also called "passive regeneration" because it is operated at low temperatures without artificially increasing the temperature of the ATS by means of fuel after-injection strategies or through the dosing of fuel directly into the exhaust pipe or by means of the activation of suitable heaters. This is one of the advantages of placing the DPF upstream of the NSC.

According to a further preferred variant of the invention, the first ATS portion comprises a so-called pSCRoF (passive SCR on filter), namely a single component capable of acting both like a particulate filter and like a passive SCR arranged downstream of the NSC. Evidently, there is no DPF upstream of the SCR. In this case, the natural regeneration of the SCRof does not take place, as the exhaust gases reaching it lack N02 and, therefore, the particulate matter is entirely stored. Therefore, only the active regeneration of the pSCRoF needs to be carried out, for example by prolonging one of the regenerations of the NSC according to a reverse strategy compared to the one described above; this means that, at first, the valve downstream of the first treatment portion is switched, thus enabling the bypass duct, and then the lambda is brought to a value slightly below 1 to regenerate the NSC and afterwards to a value slightly above 1, which is prolonged until the filter of the pSCRoF is completely regenerated. The valve can immediately be re-switched to the second operating condition, after having increased the lambda or at the end of the regeneration of the DPF.

According to any one of the variants described above, the recirculation duct leading to the engine is preferably provided with a control valve for the adjustment of the recirculated exhaust gas fraction. During the regeneration of the NSC, this valve adjusts the exhaust gas fraction flowing through the first ATS portion in a way that is functional to the regeneration of the NSC, whereas in normal conditions it can adjust the recirculation of exhaust gases depending on a desired target of NOx produced by the internal combustion engine, thus acting like a known EGR device. Therefore, whereas the valve downstream of the NSC can be an ON/OFF valve, the valve arranged along the recirculation duct is a flow control valve.

In particular, during the regeneration, the flow control valve allows the flowrate of the exhaust gas flow going through the NSC to be adjusted, thus obtaining a space-velocity target value. In particular, it is configured to keep said flowrate constant, compensating a variation of the engine operation point.

According to preferred implementations of the invention, said first portion of the ATS can be arranged upstream or downstream of the turbine of the turbocharger of the internal combustion engine and, therefore, the recirculation duct is connected upstream or downstream, respectively, of the compressor of the turbocharger, thus defining a high-pressure or low-pressure EGR duct, respectively. Nevertheless, there can be an additional high-pressure or low-pressure EGR device provided with a "further" control valve of its own, which is controlled in a complementary manner with the control valve of the recirculation duct described above through all the preceding variants of the invention in order to reach a predetermined EGR target, regardless of the operating conditions of the ATS. According to a preferred variant of the invention, both in case of implementation of one single NSC and in case of implementation of two NSCs arranged structurally in parallel to one another, downstream of said valve/s there is arranged a second ATS portion, which can comprise a DOC and/or an SCR, if necessary provided with a relating CUC, if the internal combustion engine is a Diesel engine, or with a three-way catalyst, if the internal combustion engine is an Otto engine.

Alternatively, an active SCR can be provided, namely an SCR provided with a urea metering device of its own, which is housed in said second ATS portion and mainly works during the regeneration phase of the NSC, when the latter is combined with a bypass duct, i.e. a duct which is not provided with exhaust gas treatment systems.

The subject-matter of the invention is an abatement system (ATS) for pollutants of an internal combustion engine according to claim 1.

A further subject-matter of the invention is an internal combustion engine comprising the aforesaid abatement system for pollutants.

The appended claims show preferred variants of the invention, thus forming an integral part of the description.

### Brief description of the figures

Further objects and advantages of the invention will be best understood upon perusal of the following detailed description of an embodiment thereof (and of relating variants) with reference to the accompanying drawings merely showing non-limiting examples, wherein:
figure 1 shows a diagram of an internal combustion engine comprising the abatement system for pollutants according to a preferred variant of the invention;
figures 1a, 1b and 1c show different operating conditions;
figures 2a - 2e show variants of the system f figure 1;
figure 3 shows a further preferred variant of the diagram of figure 1, which can be combined with any one of the variants shown in figures 1 - 2;
figure 4 shows a preferred variant of a portion of the diagram of the preceding figures.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

The invention relates to an internal combustion engine E comprising one or more cylinders 1 - 4 with relating injectors designed to inject fuel into a relating cylinder during the compression and/or intake stroke.

In Diesel engines, the fuel is usually injected during the compression stroke, whereas, in spark-ignition engines, the fuel is injected during the intake stroke and, if necessary, also during the following compression stroke.

The engine comprises an intake pipe IP, through which fresh air is taken in from the outside, and an exhaust pipe EP, through which exhaust gases are released into the atmosphere. An exhaust gas treatment device ATS is arranged along the exhaust pipe and comprises at least one treatment portion ATS1 having at least one NSC exhaust gas treatment device. An NSC, as already mentioned above, is capable of absorbing NOx; in particular, it converts NO into N02 and stores it until said N02 needs to be reduced, at first, to NO and then to N2 by means of a so-called regenerative process, which must be carried out in an atmosphere without oxygen and rich in HC. Furthermore, the temperature must exceed a predetermined threshold of approximately 250°C.

In the presence of oxygen, the NSC is capable of converting and storing N02 up to at least 350°C, depending on the constructive features of the NSC device.

In order to allow the aforesaid regeneration to be carried out, the injectors of the engine E must be capable of carrying out after-injections in the relating cylinders, i.e. injections of fuel while the burnt mixture is being conveyed to the exhaust pipe. Alternatively, a fuel injector J1 can be arranged along the exhaust pipe, preferably immediately upstream of the first treatment portion ATS1. As explained more in detail below, both techniques can be implemented at the same time, but for further purposes, since said after-injections obviously affect the entire exhaust gas flow, whereas the injector is positioned so as to only inject fuel in the portion of flow going through the ATS1 (or ATS1').

According to the invention, upstream of the first treatment portion ATS1 (and ATS1') and, more precisely, upstream of the first point P3 there is a cooler GC, which can be bypassed. Indeed, it comprises a bypass BP1 connected in a point P1 immediately upstream of the cooler GC and in a point P2 immediately downstream of the cooler GC.

In the point P1 or P2 there is a three-way valve FP2, which is designed to control the exhaust gas flow so as to direct it towards the cooler or towards the relating bypass BP1. Said valve can be an ON/OFF valve, but is can also be an adjustable valve, so as to separate the exhaust gas flow into a first portion flowing through the cooler and a second portion flowing through the bypass BP1.

The cooler allows the temperature of the exhaust gas to be kept below 350°C, thus ensuring the full functionality of the NSC in all operating conditions of the internal combustion engine E.

According to a preferred variant of the invention, the exhaust gas flowing through the ATS1 and, in particular, the relating NSC is chocked, so that a first portion flows through it and a second portion is directly led to the outside. It is evident that the sum of the first portion and of the second portion corresponds to the entire exhaust gas flow produced by the engine E.

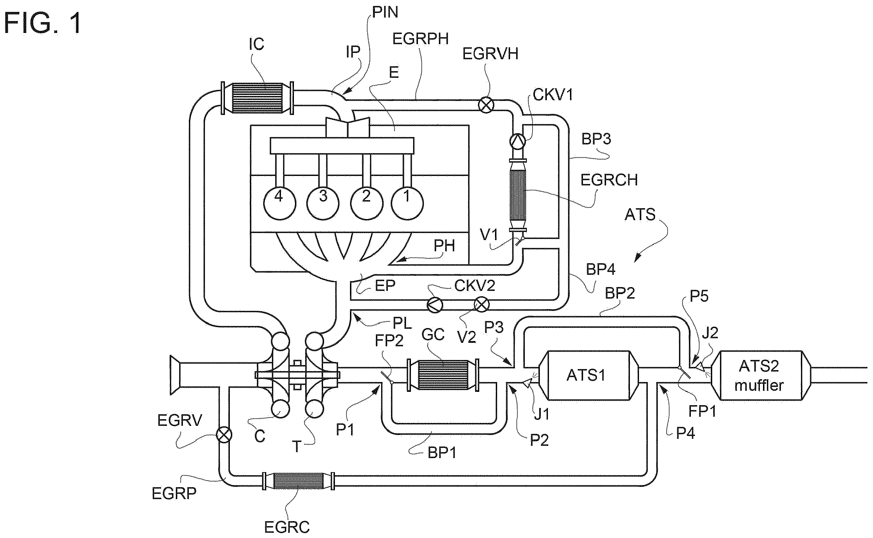

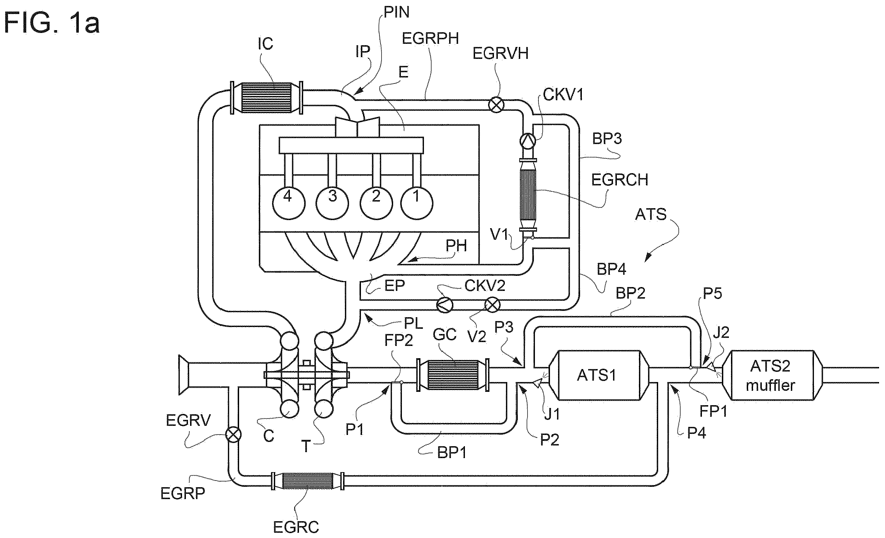

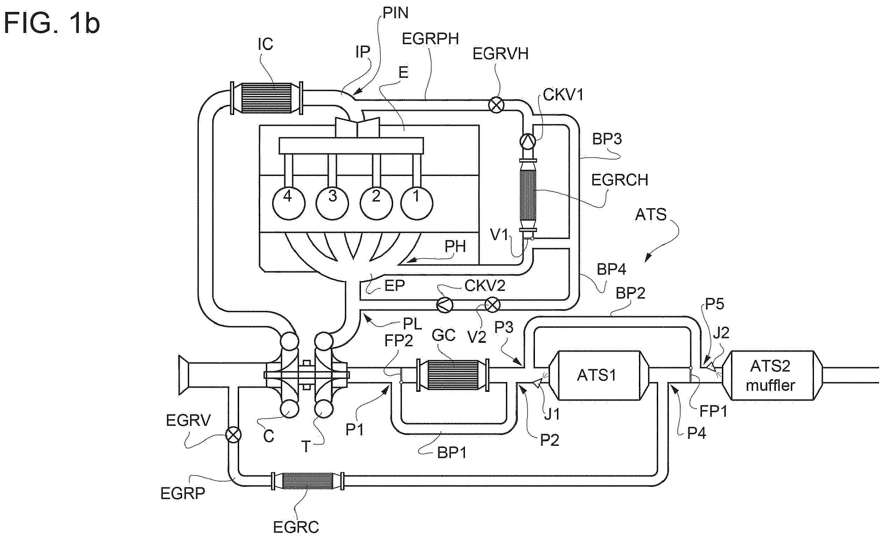

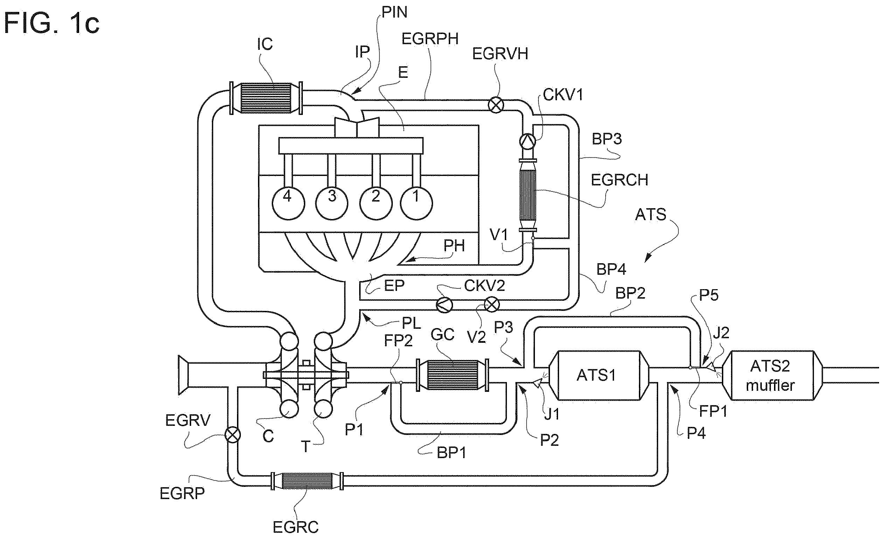

This, according to a preferred embodiment of the invention, is obtained by means of a bypass duct BP2 and a three-way valve FP1 downstream of the first portion ATS1, which is designed to selectively connect the bypass BP2 or the first ATS portion to the outside, as shown in figure 1.

When dealing with the operation of the valve FP1, figures 1a and 1c show "normal" operating conditions of the first ATS portion, namely conditions in which it is flown through by the whole exhaust gas in order to store N02.

In figure 1a, the cooler GC is working, whereas in figure 1c the cooler GC is bypassed.

In figure 1b, on the other hand, the NSC is in a regeneration phase and, therefore, the valve FP1 activates the bypass BP2 and, at the same time, the valve FP2 activates the bypass BP1, thus avoiding the cooling of the exhaust gas.

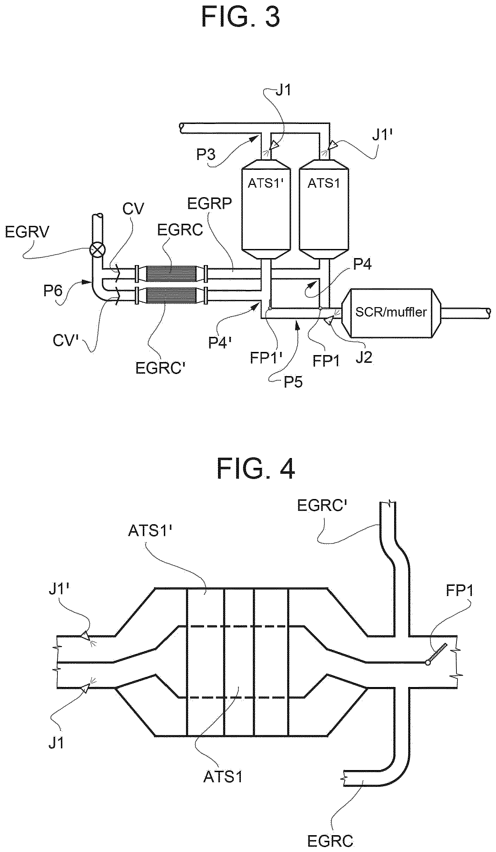

The difference between figure 3 and figure 1 lies in the fact that a second first treatment device ATS1', which is identical to ATS1, is arranged along the bypass duct BP2.

Therefore, there are two parallel branches, each provided with a first exhaust gas treatment portion, each equipped with an NSC.

In this case, two two-way valves FP1 and FP' are adopted, which are arranged downstream of each respective first treatment portion ATS1, ATS1', so as to allow the relating first portion to be connected to the outside.

Both the three-way valve FP1 and the two two-way valves FP1, FP1' are ON/OFF valves, as they are not capable of assuming intermediate positions. The implementation of two two-way valves allows both the ATS1 and the ATS1' to simultaneously operate.

When the valve FP1 or FP1' is in a position such as to disconnect the relating first treatment portion from the outside, the first exhaust gas portion flowing through the relating first treatment portion is entirely recirculated upstream of the engine E. In other words, a third point P4, P4' immediately downstream of the first treatment portion ATS1 (and ATS1') is directly connected to the intake pipe IP.

In order to allow the second exhaust gas fraction to not flow through the ATS1, said bypass duct BP is arranged along the exhaust pipe and connects a first point P3, upstream of the first treatment portion ATS1, to a second point P5, downstream of said first treatment portion ATS1, whereas the recirculation duct EGRP connects a third point P4 (and P4'), which is arranged between the first treatment portion and said second point P5.

Hence, the valve FP1, FP1' forces the first exhaust gas portion, which flows through the relating first treatment portion, to entirely recirculate towards the intake of the engine E so as to recirculate the regeneration products. When the bypass is active, the NSC of the ATS evidently is in a regeneration phase and, therefore, said after-injections or said injector J1 (or J1') are active.

Vice versa, when the bypass is deactivated, namely in "normal" operating conditions of the ATS1, the recirculation duct acts like any EGR device and the EGR fraction can be fixed and be the result of the ratio between the cross sections of the ducts or, alternatively and preferably, a control valve EGRV (and ERGV') is arranged along the recirculation duct EGRP so as to adjust the EGR flow recirculated during the "normal" operation and adjust the flowrate of the first exhaust gas fraction and, hence of the second exhaust gas fraction split between the ATS1 and the bypass duct BP.

A cooler EGRC and (EGRC') is preferably arranged along the recirculation duct.

The valve EGRV, in regeneration conditions, is preferably operated based on the regenerative process of the NSC rather than on the reduction of the NOx produced by the engine E. The latter, indeed, can also be reduced by acting upon other operating parameters of the internal combustion engine, such as
- injection times,
- if the engine is a spark-ignition engine, the spark advance;
- if the engine is provided with adjustable valve lift, intake and exhaust valve overlaps, for example creating an inner EGR.

If the cooler GC is already cooled by the cooling water of the internal combustion engine, it also allows for a quick heating thereof in cold-start condition, thus quickly improving the efficiency of the internal combustion engine. The cooler can be advantageously bypassed when the NSC of the first treatment portion needs to be regenerated, when the operating conditions of the engine and of the relating vehicle are such as not to offer an ideal NSC regeneration temperature, which ranges from 250°C to 350°C.

When the vehicle is significantly used in extra-urban cycle, the temperatures of the exhaust gas can more easily increase quickly.

According to a preferred variant of the invention, the internal combustion engine is provided with a high-pressure exhaust gas recirculation circuit. It is defined as a "high-pressure" exhaust gas recirculation circuit because, by means of a duct EGRPH, it draws the exhaust gas in a point PF immediately downstream of the exhaust manifolds and recirculates it to a point PIN immediately upstream of the intake manifolds of the internal combustion engine E. Along the EGRPH there usually are a cooler EGRCH for the recirculated exhaust gases and a control valve EGRVH. Sometimes the cooler EGRCH is provided with a relating bypass duct BP03 as well, with a relating three-way valve V1, which can be arranged both upstream and downstream of the cooler so as to selectively activate the latter or the relating bypass duct.

Furthermore, a control valve EGRVH is arranged along the duct EGRPH downstream of the cooler EGRCH and of the relating bypass duct BP3.

According to the invention, the valve V1 is arranged upstream of the cooler EGRCH and of the relating bypass BP3. Furthermore, the bypass duct BP3 is connected, by means of a further pneumatic connection BP4, to the exhaust pipe EP in a point PL downstream of the above-mentioned point PL. "Upstream" or "downstream" are referred to the gas circulation direction.

Along said further pneumatic connection BP4 there are arranged a control valve V2 and a check valve CKV2; furthermore, another check valve CKV1 is arranged immediately downstream of the cooler EGRCH, in the branch bypassed by the bypass duct BP3.

According to an operating condition, see figure 1c, the valves V1 and V2 close the bypass duct BP3 and the further pneumatic connection BP4, respectively. Therefore, the circuit acts like (which does not imply that it is) an EGR circuit of the prior art, with the recirculated gas flowrate controlled by the control valve EGRVH.

According to another operating condition, see figures 1a and 1b, the valve V1 closes the bypass duct BP3, whereas the valve V2 opens the further pneumatic connection BP4.

Since the exhaust gas does not flow in a continuous manner, but in pulsed fashion, it enters the recirculation circuit in the pint PH, flows through the cooler EGRCH and then is divided into a first portion and a second portion, depending on the opening conditions of the valve EGRVH. The first exhaust gas portion gets into the intake pipe of the engine in the point PIN, whereas the remaining potion flows through part of the bypass duct BP3 and then reaches the exhaust pipe in the point PL through the further pneumatic connection BP4.

The check valves described above allow the pulsed features of the exhaust gas to be exploited, thus allowing for the circulation thereof in the EGR circuit between the points PH and PL arranged along the exhaust pipe, even when said points have the same mean pressure.

The configuration of figure 1a can be implemented with a cold engine, the possible recirculation of non-cooled exhaust gas being metered by the control valve EGRVH.

In figure 1b, the exhaust gas is mainly recirculated through the recirculation duct EGRP of the ATS. The possible gas recirculated by means of the duct EGRPH is not cooled and is metered taking into account the contribution of the recirculation carried out by means of the recirculation duct EGRP.

Figure 1c, on the other hand, shows a "normal" operating condition with a hot engine; therefore, the possible EGR recirculated and/or sent to the ATS is cooled.

According to figure 1, the internal combustion engine E can comprise a turbocharger assembly comprising a turbine T along the exhaust pipe, which causes a compressor C arranged along the intake pipe to rotate.

With reference to figure 1, when the internal combustion engine comprises a turbocharger assembly, the ducts EGRP (and EGRP') are connected to the intake pipe upstream of the compressor C. Therefore, said ducts define low-pressure regeneration ducts.

If necessary, a cooler IC is arranged along the intake pipe between the compressor C and the intake manifold of the engine E.

The first treatment portion ATS1, ATS1' is arranged downstream of the turbine T of the turbocharger assembly and the point PH is arranged upstream of the turbine T, whereas the point PL can be arranged both between the point PH and the turbine and immediately downstream of the turbine.

In this case, a proper narrowing can be arranged along the further pneumatic connection BP4 so as to prevent the first exhaust gas portion recirculated towards the point PIN from being equal to zero or, in other words, so as to prevent the whole gas drawn from PH to reach PL without a chance to properly meter it.

Said narrowing can be avoided if the valve V2 is an adjustable control valve, instead of being an ON/OFF valve. According to said preferred variant of the invention, the EGR exhaust gas recirculation circuit is fitted so as to help cool the exhaust gases reaching the NSC contained in the first treatment portion ATS1, ATS1'.

The turbocharger assembly can evidently be presence also in the absence of said fitting of the EGR circuit, wherein by "fitting" we mean the assembly consisting of
- duct BP4,
- check valves CKV1 and CKV2,
- control valve V2.

The presence of this fitting of the EGR circuit allows the operating field of the NSC to be further extended, keeping the exhaust gases below the aforesaid 350°C basically in all the operating conditions of the internal combustion engine. The activation of the EGR circuit in order to contribute to the cooling of the exhaust gases reaching the first treatment portion (second operating condition) is evidently carried out after having exploited the potentialities of the cooler GC. This means that, when the latter is not sufficient any longer to keep the temperature of the NSC below 350°C, then the aforesaid valves VI and B2 are operated according to said second operating condition.

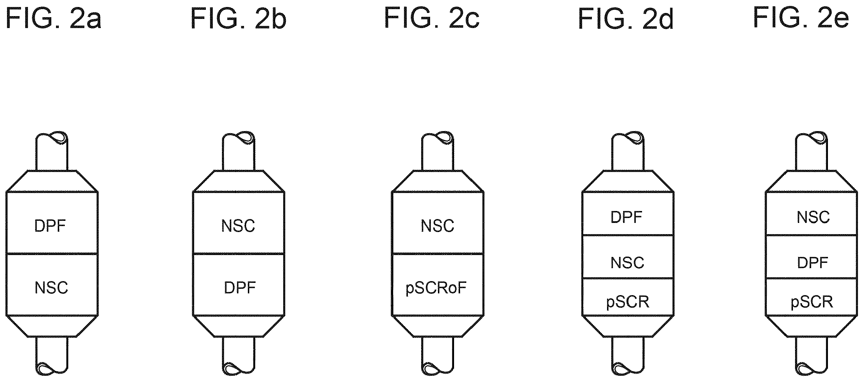

According to a preferred variant of the invention, see figures 2a and 2b, said first portion ATS1 (and ATS1') also comprises a DPF arranged upstream or downstream of the NSC. For example, in figure 2a, the DPF is arranged upstream of the NSC, whereas, in figure 2b, the DPF is arranged downstream of the NSC.

"Upstream" or "downstream" must be interpreted in relation to the circulation of exhaust gas, if dealing with the ATS, or to the circulation of fresh air, which then turns into exhaust gas, if dealing with the engine E.

The arrangement of the DPF upstream of the NSC offers some advantages. Preferably, the core of the DPF is coated with an oxidising treatment, preferably a platinum-based one. During the normal operation of the ATS, the platinum-based coating allows for the oxidation of NO to N02 contained in the exhaust gases produced by the internal combustion engine. This N02 increase supports the natural regeneration of the DPF. Natural regeneration is also called "passive regeneration" because it is operated at low temperatures without artificially increasing the temperature of the ATS by means of fuel after-injection strategies or through the metering of fuel directly into the exhaust pipe or by means of the activation of suitable heaters. This is one of the advantages of placing the DPF upstream of the NSC. According to a preferred strategy to control the fuel injector J1 (or J1') in the exhaust pipe, the following steps are carried out:
- adjusting the fuel metering so as to obtain a total lambda at the inlet of the first treatment portion slightly above 1, namely ranging from 1.01 to 1.2,
- switching said valve (FP1, FP1') so as to cause said recirculation of gas flowing through said first treatment portion; in other words, allowing said second exhaust gas fraction to bypass the ATS1,
- adjusting the fuel metering by means of said metering device J1 so as to obtain a total lambda at the inlet of the first treatment portion slightly below 1, namely ranging from 0.8 to 0.99.

This fact allows for a preventive regeneration of the DPF, which needs oxygen to burn the stored particulate matter, and in the meantime the temperature of the ATS1 is gradually increased.

Subsequently, the NSC is regenerated with the injection of fuel so as to zero the presence of oxygen and the valve FP1 or FP1' is positioned so as to interrupt the connected between the outlet of the first ATS portion and the outside. According to a preferred variant of the invention, which can be combined with the previous ones described above, said first treatment portion ATS1 comprises a passive SCR pSCR, which is arranged immediately downstream of said NSC, preferably in the same caning as the NSC and, therefore, upstream of said third point P4, P4'.

Said SCR can work autonomously, namely without the dedicated injection of a urea-based reducing agent, since the ammonia to be stored in it represents one of the regeneration products of the NSC arranged upstream of the passive SCR. Further combinations can be provided, in which, for example, the ATS1 comprises a DPF-NSC-pSCR in succession according to the exhaust gas flow, as shown in figure 2d.

Alternatively, it is possible to implement an NSC followed by a
SCRoF, namely an SCR which is capable of filtering the carbon particulate matter. To this regard, see figure 2c. Furthermore an NSC-DPF-pSCR configuration according to figure 2e can be provided, separating the features of the pSCRoF of figure 2c.

Evidently, in this case, the particulate matter trap is arranged downstream of the NSC and, therefore, the natural regeneration of the filtering part of the SCRoF cannot be exploited in the absence of N02.

Figure 3 shows another preferred version of the invention, in which the first portion ATS1 comprises, in succession, an NSC-DPF-SCR or an NSC-SCRoF and between the NSC and the remaining components DPF-SCR or SCRoF there is arranged an injector J2 for a urea-based reducing agent. In this way, said agent can be metered so as to reduce possible NOx which is not converted and trapped by the NSC when the engine E works in high-load conditions for a long time and the temperature of the NSC cannot be limited to the aforesaid 350°C. Indeed, the presence of the metering device J2 allows the NOx to be mainly reduced through the SCR/SCRoF, but only in particular, unusual condition, when the NSC is suffering. The refilling of the tank containing the urea-based reducing agent can be limited to the same schedule of the oil change of the internal combustion engine E.

When an SCR or pSCR is arranged downstream of the NSC in the ATS1, the NSC can advantageously be regenerated right before turning off the engine E, when this is foreseeable. This fact allows the NH3 produced by the regeneration to be stored in the SCR or pSCR and preserved until the next starting of the engine. In case of a cold starting, the previous storing of NH3 in the SCR cooperates with the capacity of the NSC to convert and trap NOx produced by the engine E.

Downstream of the ATS1 and, precisely, downstream of the point P5 there can be a second treatment portion identified as ATS2. This is not compulsory, since the regenerations can be so quick and scarcely frequent that they do not compromise the total amount of pollutants released into the atmosphere, even when the first treatment portion is associated with a relating bypass duct BP2.

Said second treatment portion ATS2 can comprise an active SCR having a relating urea-based additive metering device J2, which is arranged upstream of the SCR. Said metering device can be arranged between the ATS1 and the ATS2 or even upstream of the ATS1, obviously downstream of the engine E. The second portion ATS2 is implemented when it is more likely for the temperature of the exhaust gas to exceed 350°C for a long time or when there are likely going to be long regeneration times of the ATS1, which is combined with a relating bypass duct BP1, rather than with a second first portion ATS1' in parallel to the first one ATS1.

Said urea-based metering device can be configured to meter said additive when said first valve FP1 is in said second operating condition so as to supply the SCR of the ATS2, when the ATS1 is bypassed, but it can also be configured to meter said additive when the first valve is in the first operating condition as long as a temperature of the NSC is below a predetermined temperature threshold, for example 200°C. In these conditions, indeed, some NSCs act like an SCR, thus converting NOx without storing N02. This evidently depends on the type of NSC implemented.

This behaviour is linked to the presence of platinum in the NSC, a compound which has, at low temperatures, a reactive selectivity towards NH3 and NOx, thus actually acting like an SCR. This selectivity disappears at temperatures exceeding 250°C. Therefore, the ideal temperature range for the operation of the NSC, in order to covert NO into N02 and store N02, approximately ranges from 200°C to 350°C. According to another preferred embodiment of the invention, the ATS2 consists of a DOC, namely one single abatement device, to convert at least the HC going through the bypass and directed towards the outside during the regeneration of the ATS1.

According to a preferred implementation of this variant, with a DOC used as ATS2, when the ATS is cold as a whole, upon starting of the engine, the first valve FP is kept open in said first operating condition so as to ensure a quick heating of the DOC, exploiting the fact that regulations currently enforced do not take into account the pollutants released into the atmosphere during the first engine starting phases.

The variants described above are particularly suitable for Diesel engines.

In case of a spark-ignition engine and, therefore, an engine suited to be supplied with petrol or natural gas or liquefied petroleum gas (GPL), an ATS2 can be provided, which comprises a three-way catalyst, which is well known to a person skilled in the art. A particulate filter, also known as GPF (Gasoline Particulate Filter), can preferably be installed in the first portion ATS1 downstream of the NSC.

Figure 3, as already mentioned above, shows a preferred variant of the invention, in which the bypass duct is also equipped with the same abatement components as the first treatment portion ATS1. Therefore, ATS1' indicates a parallel replica of the first portion ATS1.

In this symmetric configuration, each branch evidently defines a bypass duct for the other branch.

Each first treatment portion ATS1/ATS1' comprises a relating recirculation duct EGRP/EGRP' connected to the intake pipe of the internal combustion engine and a relating first valve FB1/FB1' to selectively cause a recirculation or a directing towards the outside of an exhaust gas flowing through the first treatment portion, which, as already mentioned above, represents a bypass duct for the other portion.

The recirculation ducts can be more or less integrated. For example, in figure 3, the two exhaust gas recirculation ducts EGRP, EGRP' have separate and independent coolers EGRC/EGRC' as well as check valves CV/CV' arranged between the coolers EGRC/EGRC' and the point P6, in which the two ducts are joined in order to be connected to the intake pipe IP. Downstream of said point there is the control valve EGRV used to adjust the exhaust gas flowrate flowing through the first portion ATS1/ATS1' during the relating regeneration. The control valve can be replicated in each recirculation duct EGRP, as well.

Alternatively, the check valves CV/CV' can be shifted upstream of the coolers EGRC/EGRC', which can be joined in one single cooler.

According to this preferred variant of the invention, which is based on two first treatment portions ATS1/ATS1' in parallel to one another, two fuel metering devices are preferably arranged along the exhaust pipe immediately upstream of the point in which the exhaust pipe branches off, so that the fuel injected by a metering device J1, J1' does not affect the operation of the other branch.

In this case, again, it is possible to implement the after-injections as explained above.

Indeed, regardless of the implementation of ATS1 + bypass duct or double first treatment portion ATS1/ATS1', the after-injections can be anyway implemented in order to heat the ATS1/ATS1' in the first starting phases of the engine. Subsequently, the after-injections are interrupted and the regenerations are carried out with the metering devices J1, J1' arranged along the exhaust pipe.

According to a preferred ATS operating strategy, said first valves FB1, FB1' are in said recirculation condition only in alternation and are simultaneously in said second operating condition when the internal combustion engine delivers a torque exceeding a predefined threshold torque, for example 40 - 50% of the nominal torque. By so doing, in high-load operating conditions, the entire capacity of the ATS can be exploited, thus reducing the total load losses of the ATS, but, at the same time, exploiting the thermal and storing capacities of of both branches containing ATS1 and ATS1'.

According to a preferred implementation of the invention, the management of the operation of the ATS is assigned to the ECU (engine control unit), which controls the operation of the internal combustion engine.

In particular, the ECU is configured to control the valve FP2 and, therefore, adjust the cooling of the exhaust gas hitting the first ATS portion.

Furthermore, said ECU is configured to cause said first and second operating conditions and is configured to
- control said fuel metering means, regardless of whether they are obtained by means of after-injections or by means of injectors/nozzles J arranged along the exhaust pipe,
- control the calibration of a fuel injection in at least a cylinder of the internal combustion engine in said second operating condition, taking into account the recirculated compounds. If the engine is a spark-ignition engine, it is also possible to control the ignition.

Furthermore, if the engine E comprises an adjustable valve lift device, generally indicated with VVA, the ECU can also control the opening angles of the valves, thus creating, for example, an inner EGR during the regeneration phase, so as to minimize the production of NOx, especially when a bypass duct is implemented, which is not provided with abatement devices, like it is shown in figures 1 - 3.

According to a preferred aspect of the invention, the ECU unit can estimate regeneration products, such as HC, NH3 and others, and adjust the injection of fuel in the cylinders taking into account the contribution coming from the total recirculation of said regeneration products.

The invention also relates to a method for the abatement of the pollutants produced by an internal combustion engine E comprising an intake pipe IP and an exhaust pipe EP, as well as an ATS device for the abatement of the pollutants contained in the exhaust gases produced by the internal combustion engine, which has a first exhaust gas treatment portion ATS1, ATS1' comprising an NSC, the method comprising, during a regeneration of said first treatment portion ATS1, ATS1', the step of partially bypassing said first treatment portion, so that a first exhaust gas portion flows through said first treatment portion, and of entirely recirculating said first exhaust gas portion upstream of the internal combustion engine, so as to exploit said internal combustion engine as burner of regeneration products released by said first treatment portion.

Figure 4 shows a preferred variant of the configuration of figure 3.

In particular, the two first ATS portions: ATS1 and ATS1' are concentric relating to one another.

In particular, the ATS1 is arranged at the centre, whereas the ATS1' surrounds the ATS1.

It is evident that both devices are obtained in the same canning and, in particular, the ATS1' acts like a thermal insulation for the ATS1. Therefore, especially when the core of the NSC is made of a ceramic material, during the first operating phases of the internal combustion engine E and of the ATS, heat is stored at the centre of the structure, thus more quickly reaching 200°C.

Unlike figure 3, in which two two-way valves FP1 and FP1' are used, in the configuration of figure 4 a three-way valve FP1 is used, which fulfils the same function as the two valves FP1 and FP1'

The two devices ATS1 and ATS1', having a different geometry and a different heat dissipation capacity, can evidently be used with different duty cycles, favouring the ATS1 when the temperature of the exhaust gases is close to or below 200°C and favouring the ATS1' when the temperature is close to or exceeds 350°C.

All the variants of the first ATS portion preferably are of the close coupled type, i.e are arranged in the engine compartment and substantially under the hood of the vehicle used for the transportation of people and/or goods.

When there optionally is a second ATS portion, the latter preferably is of the underfloor type, i.e. is arranged under the floor of the vehicle used for the transportation of people and/or goods.

With reference to figure 4, the parallel lines perpendicular to the circulation of the exhaust gas flow identify interfaces for the separation of different devices, according to what described above, DPF-NSC, NSC-DPF, NSC-pSCR, etc..

According to a preferred variant of the invention, a housing, in which opposite ends are identified, house one single treatment core defining a NSC, which is designed to treat exhaust gases flowing through the housing, which, hence, defines an exhaust gas treatment device, and wherein said single core is divided into a central portion and an annular portion around said central portion, and wherein the housing comprises partitions arranged so as to identify two separate and distinct paths between said opposite ends, of which a first path (ATS1) passes through said central portion and a second path (ATS1') passes through said annular portion of the single core.

This invention can be advantageously implemented by means of a computer program comprising encoding means for carrying out one or more steps of the method, when the program is run on a computer. Therefore, the scope of protection is extended to said computer program and, furthermore, to means that can be read by a computer and comprise a recorded message, said means that can be read by a computer comprising program encoding means for carrying out one or more steps of the method, when the program is run on a computer.

The non-limiting example described above can be subjected to variations, without for this reason going beyond the scope of protection of the invention, comprising all equivalent embodiments for a person skilled in the art.

When reading the description above, a skilled person can carry out the subject-matter of the invention without introducing further manufacturing details. The elements and features contained in the different preferred embodiments, drawings included, can be combined with one another, without for this reason going beyond the scope of protection of this patent application. The information contained in the part concerning the state of art only serves the purpose of better understanding the invention and does not represent a declaration of existence of the items described. Furthermore, if not specifically excluded by the detailed description, the information contained in the part concerning the state of art should be considered as an integral part of the invention.

## Claims

1. An abatement system for pollutants produced by an internal combustion engine (E) having an intake pipe (IP) and an exhaust pipe (EP), the system comprising
- a device (ATS) for the abatement of pollutants contained in the exhaust gases produced by the internal combustion engine, wherein said device comprises at least a first treatment portion (ATS1, ATS1') of exhaust gases comprising a NSC,
- fuel metering means (J1, J1') adapted to introduce fuel into said first treatment portion,
- a first cooler (GC) arranged on said exhaust pipe upstream of said first treatment portion, and comprising its own bypass means (BP2, FP2) for adjusting a temperature of said first treatment portion;
- a second bypass duct (BP2) adapted to bypass said first treatment portion arranged for connecting a first point (P3), upstream of the first treatment portion, to a second point (P5), downstream of the first treatment portion,
- a recirculation duct (EGRP) that connects a third point (P4), arranged between said first treatment portion (ATS1, ATS1') and said second point (P5), to the intake pipe (IP) of the internal combustion engine,
- a first valve (FP1, FP1') arranged to selectively cause, in a first normal operating condition, a directing of said exhaust gas towards the external environment passing through said first treatment portion and, in a second regeneration operating condition, an exhaust gas recirculation, towards said intake pipe passing through said first treatment portion;
**characterized by** comprising a metering device (J2) for a urea-based additive, arranged immediately upstream of said first point (P3) and configured to meter said additive when said first valve causes said second regeneration operating condition and/or when said first valve causes said first normal operating condition until a temperature of said NSC is lower than a predetermined threshold temperature.

2. The system according to claim 1, wherein said first bypass means comprise a duct having an inlet connected immediately upstream (P1) of said cooler and an outlet connected immediately downstream (P2) of said first cooler.

3. The system according to claim 1 or 2, wherein said first cooler is cooled by means of cooling water of said internal combustion engine (E) and wherein said first bypass means (BP2, FP2) are configured to force the exhaust gas to pass through said first cooler with a cold engine in order to accelerate a heating of said cooling water.

4. The system according to claim 1 or 2, wherein said first cooler is cooled by means of environmental air or different gas and wherein said first bypass means (BP2, FP2) are configured to bypass said first cooler with cold engine, allowing a rapid heating of said first treatment portion.

5. The system according to any of the foregoing claims, wherein said first valve is configured to completely occlude said bypass duct in said first normal operating condition.

6. The system according to any of the foregoing claims, wherein, when the internal combustion engine (E) is in operation, the system is configured to alternatively actuate
- said second regeneration operating condition, wherein said fuel metering means (J1, J1') are operative, introducing fuel into said first treatment portion,
- said first normal operating condition, wherein said fuel metering means are closed.

7. The system according to any one of the preceding claims, wherein said recirculation duct (EGRP) comprises a first control valve (EGRV) arranged in order to adjust an exhaust gas flowrate passing through said first treatment portion (ATS1, ATS1') and recirculated to the intake of the internal combustion engine.

8. The system according to any one of the preceding claims, further comprising a second treatment portion (ATS2) arranged downstream of said first treatment portion and comprising an active SCR.

9. The system according to any one of the preceding claims, wherein said second bypass duct (BP2) defines a second first treatment portion (ATS1') identical and mutually parallel to said first treatment portion (ATS1) and comprising a second relating recirculation duct (EGRP) connected to said intake pipe of the internal combustion engine and a further relating first valve (FB') to selectively cause, in a further first normal operating condition, a directing of said exhaust gas towards the external environment passing through said second first treatment portion and, in a further second regeneration operating condition, an exhaust gas recirculation, towards said intake pipe passing through said second first treatment portion.

10. The system according to any one of the preceding claims, wherein said recirculation duct (EGRP) comprises a cooler (EGRC) for cooling said flow of recirculated exhaust gas.

11. An internal combustion engine having an intake pipe (IP) and an exhaust pipe (EP) and **characterised in that** it has a system according to any one of the preceding claims.

12. The engine according to claim 11, further comprising a control unit (ECU) configured to carry out at least one of the following procedures:
- controlling an activation of said first cooler in order to adjust a temperature of said first treatment portion (ATS1, ATS1'),
- activating said first and second operating conditions and controlling said fuel metering means (J1, J1'),
- controlling said directing means for supplementing said first cooler to adjust said temperature of said first treatment portion,
- controlling a fuel injection calibration in at least one cylinder of the internal combustion engine in said second operating condition taking into account compounds recirculated.
